# EUROPEAN PATENT APPLICATION

(11) **EP 1 965 317 A1**
(43) Date of publication of application: **03.09.2008**
(21) Application number: 08101143.9
(22) Date of filing: 31.01.2008
(51) Int. Cl.: G06F 17/30

(54) **Content providing method, content playback method, portable wireless terminal, and content playback apparatus**

(30) Priority: 01.02.2007 JP 2007023222; 01.02.2007 JP 2007023223
(71) Applicant: Sony Corporation, Tokyo 108-0075 (JP)
(72) Inventor: Sasaki, Toru, Tokyo 108-0075 (JP); Tange, Akira, Tokyo 108-0075 (JP); Matsuda, Masafumi, Tokyo 108-0075 (JP); Jung, Yongjin, Tokyo 108-0075 (JP); Nakamura, Kentaro, Tokyo 108-0075 (JP); Tokuhara, Kumiko, Tokyo 108-0075 (JP); Kasahara, Masaki, Tokyo 108-0075 (JP)
(74) Representative: Melzer, Wolfgang

(57) **Abstract**

Content data is provided as follows. If a request for providing a content is received from a portable wireless terminal or a content playback apparatus associated with the portable wireless terminal, then content data of the requested content in a form adapted for use by the portable wireless terminal is provided to the portable wireless terminal. Furthermore, content data of the requested content in a form adapted for use by the content playback apparatus is also provided to the content playback apparatus, or a process for providing content data of the requested content in the form adapted for use by the content playback apparatus is performed.

## Description

### CROSS REFERENCES TO RELATED APPLICATIONS

The present invention contains subject matter related to Japanese Patent Application JP 2007-023222 filed in the Japanese Patent Office on February 1, 2007 and Japanese Patent Application JP 2007-023223 filed in the Japanese Patent Office on February 1, 2007, the entire contents of which are incorporated herein by reference.

### BACKGROUND OF THE INVENTION

### 1. Field of the Invention

The present invention relates to a method of providing content data, a method of playing back provided content data, a method of playing back content data such as music content data, image content data, etc., and a content playback apparatus such as a portable wireless terminal having a capability of playing back content data such as a portable telephone terminal, a home server, a car stereo system, etc.

### 2. Description of the Related Art

Nowadays, many people are enjoying listening to music or viewing images by playing back a music or image content on a PC (Personal Computer) or a home server installed in a home. Content data may be downloaded not only into PCs or home servers installed in homes but also into portable wireless terminals such as a portable telephone terminal. This allows users to enjoy listening to or viewing content data not only in homes but also outdoors.

For the above purpose, there are many methods of providing content data.

For example, in a technique disclosed in Japanese Unexamined Patent Application Publication No. 2000-216684, music content data is transmitted from a sever via a satellite such that original music content data in a non-compressed form such as PCM (Pulse Code Modulation) data and music content data in a compressed form produced by the original data are stored on a hard disk drive installed in the server, and the music content data in the compressed form is transmitted. After transmission is completed, the compressed content data may be deleted, and only the PCM data may be retained.

In a technique disclosed in Japanese Unexamined Patent Application Publication No. 2001-229095, a part of music content data or software such as game software is transmitted in a compressed form so that a user is allowed to evaluate received content data or software in a short time. If a user likes the content data or software and decides to purchase it, the whole content data or software is provided by transmission or in the form of package data using a disk or the like.

In a technique disclosed in Japanese Unexamined Patent Application Publication No. 2005-56240, an owner of content data gives a license to use content data to a user for a fee. On receiving a request for content data from the user, original non-compressed content data is converted into a data format specified by the user and provided to the user.

In a technique disclosed in Japanese Unexamined Patent Application Publication No. 2005-352290, a music data providing center downloads music data from a music data server, and a user enjoys playing back music data on a user terminal connected to the music data providing center via a network.

In a technique disclosed in Japanese Unexamined Patent Application Publication No. 2001-242874, a user is allowed to access a music data providing server via a public communication network to acquire music data. If the user specifies music data by inputting a music title or an artist name via voice to a terminal having a capability of playing back music data, then the voice signal of the voice command input by the user is sent to the music data providing server. In response, the music data providing server transmits the requested music data to the terminal.

In a technique disclosed in Japanese Unexamined Patent Application Publication No. 2004-37981, a home server installed in a home, a wireless router connected to the home server, a terminal located in a vehicle in an outdoor parking space, and a wireless device connected to the in-vehicle terminal are connected to each other via a wireless LAN. If a user selects a music title, via the in-vehicle terminal, from a list of music data stored in the home server, the selected music data is transmitted from the home server to the in-vehicle terminal via the wireless router and the wireless device. Thus, the user is allowed to enjoy listening to music played back on the in-vehicle terminal.

### SUMMARY OF THE INVENTION

When a user wants to download content data of music or the like into a portable wireless terminal such as a portable telephone terminal and listen to or view the downloaded content, the user operates the portable wireless terminal to access a site of a content data provider and issue a request for transmission of content data of a selected content. The content data provider authenticates the user and transmits the requested content data to the portable wireless terminal.

Because of the limitation on the bandwidth (capacity) of communication lines and the storage capacity and the playback capability of the portable wireless terminal, it is difficult to transmit original content data with a large data size. In most cases, to avoid the above problem, the original content data is converted into a compressed format such as a MPEG (Moving Picture Experts Group) format and the content data in the compressed form is transmitted.

Although the maximum available communication rate of the portable telephone network is gradually increasing, transmission of original content data with a large data size would need a large number of packets and thus a long communication time. The result of this would be that the user has to pay a high communication fee in addition to a fee for content data. Thus, it is necessary to compress the content data.

Furthermore, although an increase has been achieved in the storage capacity of a recording medium such as a hard disk drive or a flash memory used in the portable wireless terminal such as a portable telephone terminal, the storage capacity is still limited. Thus, to store a large number of content data, it is desirable to compress content data.

Because the portable wireless terminal needs to be high in portability, it is difficult to achieve high sound/image quality in an amplifier, a speaker, a display, etc.

Although the portable wireless terminal has limitations described above, the portable wireless terminal has the great advantage that it is possible to receive content data anywhere and anytime, and thus the portable wireless terminal is increasingly becoming popular.

It is possible to transfer or copy content data stored in the portable wireless terminal to a PC or a home server installed in a home of the user and play back the content using a device having high performance.

However, even in this case, use of content data in the compressed form optimized for use by the portable wireless terminal makes it difficult to achieve high sound/image quality in the played-back content even if a high-quality device is used in playing back the content.

To listen to or view a high-quality content using a PC or a home server at a home, it is necessary to purchase high-quality content data stored on a CD (Compact Disc), DVD (Digital Versatile Disc), or the like and transfer the content data into the PC or the home server.

However, content data stored in such a package medium is copy-protected for copyright protection, and thus it is not allowed to transfer the content data stored in the PC or the home server to the portable wireless terminal to enjoy listening to or viewing the content on the portable wireless terminal. To play back a content on the portable wireless terminal, it is necessary to acquire content data of the content from the content data provider separately from content data for use on the PC or the home server.

In view of the above, it is desirable to provide a technique to receive content data adapted for use on the portable wireless terminal and store the received content data in the portable wireless terminal and also receive content data adapted for use on a content playback apparatus installed in a home or a vehicle and store the received content data In the content playback apparatus without having to separately request a content data provider to provide the content data of the two types thereby to allow a user to enjoy listening to or viewing the same content on the portable wireless terminal and the content playback apparatus although the content played back on the portable wireless terminal is relatively low in sound/image quality compared with that played back on the content playback apparatus.

When a user wants to download content data of music or the like into a portable wireless terminal such as a portable telephone terminal and listen to or view the downloaded content, the user operates the portable wireless terminal to access a site of a content data provider and issue a request for transmission of content data of a selected content. The content data provider authenticates the user and transmits the requested content data to the portable wireless terminal.

Although an increase has been achieved in the storage capacity of a recording medium such as a hard disk drive or a flash memory used in the portable telephone terminal or other types of portable wireless terminals, the storage capacity is still limited. Thus, to store a large number of content data, it is desirable to compress content data.

Because the portable wireless terminal needs to be high in portability, it is difficult to achieve high sound/image quality in an amplifier, a speaker, a display, etc.

Although the portable wireless terminal has limitations described above, the portable wireless terminal has the great advantage that it is possible to receive content data anywhere and anytime, and thus the portable wireless terminal is increasingly becoming popular.

It is also possible to read content data such as music content data from a recording medium such as a CD into a PC or a home server or download such content data into the PC or the home server from a content data provider such as a music data provider. The content data stored in the PC or the home server can be transferred to the portable wireless terminal to play back the content data on the portable wireless terminal.

It is also possible to transfer content data stored in the portable wireless terminal to the PC or the home server to play back the content using the device having high performance.

However, in this case, use of the content data in the compressed form optimized for use by the portable wireless terminal makes it difficult to achieve high sound/image quality in the played-back content even if the high-performance device is used in playing back the content.

In this case, if the user forgets to transfer the content data from the portable wireless terminal to the home server, when the user tries to play back the content on the home server at his/her home, the user will recognize that the content data has not yet been transferred to the home server. In this case, the user needs to operate the portable wireless terminal to transfer the content data to the home server from the portable wireless terminal and then operate the home server to play back the transferred content data, otherwise the user is only allowed to play back the content on the portable wireless terminal by operating the portable wireless terminal. Anyway, the user needs to perform a complicated operation.

In view of the above, it is desirable to provide a technique to control an operation of playing back a content on a content playback apparatus simply by operating a portable wireless terminal such as a portable telephone terminal functioning as a remote controller of the content playback apparatus.

According to an embodiment of the present invention, there is provided a content data providing method comprising the steps of, if a request for providing a content is received from a portable wireless terminal or a content playback apparatus associated with the portable wireless terminal, providing content data of the requested content in a form adapted for use by the portable wireless terminal to the portable wireless terminal, and providing content data of the requested content in a form adapted for use by the content playback apparatus to the content playback apparatus or performing a process for providing content data of the requested content in the form adapted for use by the content playback apparatus.

The content data for use by the portable wireless terminal may be in a compressed form, and the content data for use by the content playback apparatus may be in a non-compressed form.

In this content data providing method, if a user issues a content providing request at any place (for example, outdoors) from the portable wireless terminal to a content data provider, the content data provider transmits content data of the content in the form (for example, in a compressed form) adapted for use by the portable wireless terminal to the portable wireless terminal, and the content data provider also transmits content data of the content in the form (for example, in a non-compressed form) adapted for use by the content playback apparatus directly to the content playback apparatus specified in advance by the user or specified in the content providing request or the content data provider performs a process for providing content data of the requested content in the form adapted for use by the content playback apparatus.

The user is allowed to receive content data (for example, in the compressed form) for use by the portable wireless terminal and store it in the portable wireless terminal at any place (for example, outdoors) and the user is allowed to immediately play back the acquired content data on the portable wireless terminal. Besides, the content data of the same content in the form adapted for use by the content playback apparatus (for example, content data in the non-compressed form) is automatically transmitted to content playback apparatus installed in the user's home or vehicle without the user having to separately issue a request for transmission of content data of the same content to the content playback apparatus whereby the user is allowed to listen to or view the content with the high quality when the user comes back home.

As described above, the user is allowed to receive content data adapted for use on the portable wireless terminal and store the received content data in the portable wireless terminal and also receive content data adapted for use on the content playback apparatus installed in the home or the vehicle and store the received content data in the content playback apparatus without having to separately request the content data provider to provide the content data of the two types whereby the user is allowed to enjoy listening to or viewing the same content on the portable wireless terminal and the content playback apparatus although the content played back on the portable wireless terminal is relatively low in sound/image quality compared with that played back on the content playback apparatus.

According to another embodiment of the present invention, there is provided a method of playing back content data in a content playback system including a portable wireless terminal and a content playback apparatus which are capable of wirelessly communicating with each other, comprising the steps of, when a command to play back a content whose content data for use by the portable wireless terminal is stored in the portable wireless terminal is issued on the portable wireless terminal, transmitting a command to play back the content from the portable wireless terminal to the content playback apparatus by wireless communication, and, if content data of the content for use by the content playback apparatus is stored in the content playback apparatus, playing back the content on the content playback apparatus by using the content data for use by the content playback apparatus.

If content data of the content is not stored in the content playback apparatus, then one of the following processes is performed: (1) a command to play back the content is transmitted from the content playback apparatus to the portable wireless terminal by the wireless communication, and, in response, the content is played back on the portable wireless terminal by using the content data stored in the portable wireless terminal, or (2) a request for transmission of content data of the content is transmitted from the content playback apparatus to the portable wireless terminal by the wireless communication, the content data of the content is transmitted from the portable wireless terminal to the content playback apparatus by wireless communication, and the content is played back on the content playback apparatus by using the received content data.

In the content playback method, when the portable wireless terminal and the content playback apparatus are in a state which allows them to wirelessly communicate with each other in a user's home or vehicle, if the user selects a content and issues a command to play back the selected content via the portable wireless terminal, then, if content data of the selected content exits in the content playback apparatus, the content is played back using this content data via a high-performance audio/video output device of the content playback apparatus.

In a case where content data of the selected content is not stored in the content playback apparatus, the content is played back on the portable wireless terminal in response to a command issued by the content playback apparatus, or the content data of the selected content is supplied from the portable wireless terminal to the content playback apparatus in response to a request issued by the content playback apparatus and the content is played back on the content playback apparatus by using the supplied content data.

As described above, the present invention provides techniques which allow a user to play back a content on the content playback apparatus such as a home server simply by operating the portable wireless terminal such as a portable telephone terminal functioning as the remote controller of the content playback apparatus.

### BRIEF DESCRIPTION OF THE DRAWINGS

Fig. 1 is a diagram illustrating an example of a system configuration;
Fig. 2 is a diagram illustrating an example of an outward appearance of a content playback system;
Fig. 3 is a diagram illustrating an example of a portable wireless terminal;
Fig. 4 is a diagram illustrating an example of a content playback apparatus;
Fig. 5 is a flow chart illustrating an example of a process of sending a request for data from a portable wireless terminal and sending requested data to the portable wireless terminal;
Fig. 6 is a flow chart illustrating an example of a process of accessing a content playback apparatus and transmitting data from the content playback apparatus;
Fig. 7 is a flow chart illustrating an example of playing back content data;
Fig. 8 is a flow chart illustrating another example of playing back content data;
Fig. 9 is a flow chart illustrating a part of a content playback process performed by a portable wireless terminal and a content playback apparatus;
Fig. 10 is a flow chart illustrating a following part of the content playback process performed by the portable wireless terminal and the content playback apparatus; and
Fig. 11 is a flow chart illustrating a further following part of the content playback process performed by the portable wireless terminal and the content playback apparatus.

### DESCRIPTION OF THE PREFERRED EMBODIMENTS

### Examples of System Configurations

### Total System Configuration

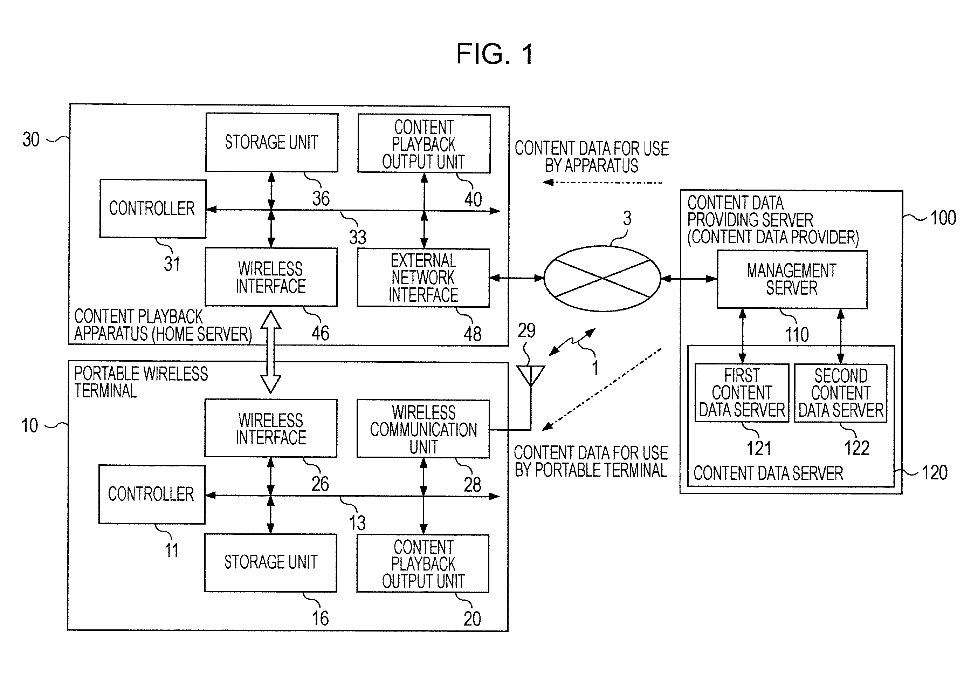

Fig. 1 illustrates an example of a system configured to implement a content providing method and a content playback method according to an embodiment of the present invention.

In this example shown in Fig. 1, the system includes a portable wireless terminal 10 and a content playback apparatus (home server) 30 installed at a user's place, and also includes a content data providing server (content provider) 100.

The portable wireless terminal 10 is, for example, a portable telephone terminal configured to have a telephone communication capability and also a capability of playing back content data by performing a process including accessing the content data providing server 100 via a portable telephone network 1 and the Internet 3, sending a request for transmission of content data to the content data providing server 100, receiving the content data transmitted in response to the request from the content data providing server 100, storing the received content data in a recording medium installed in or mounted on the portable wireless terminal 10, and reading the content data from the recording medium thereby playing back the content data.

The portable wireless terminal 10 also has a capability of directly communicating with the content playback apparatus 30 by wireless communication, when the portable wireless terminal 10 is located within a particular range from the content playback apparatus 30.

In brief, the portable wireless terminal 10 includes a controller 11, a storage unit 16, a content playback data output unit 20, a wireless interface 26, and a radio communication unit 28 connected to an antenna 29, wherein these units are connected to each other via a bus 13.

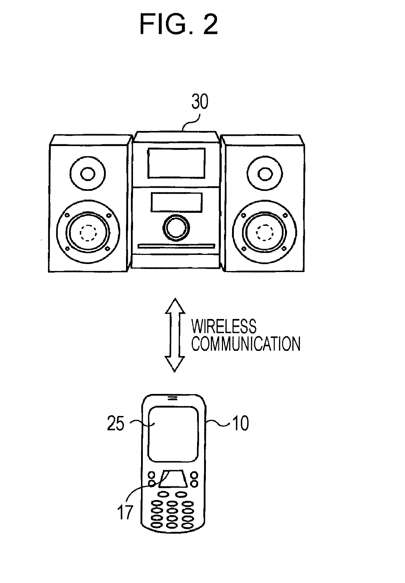

The content playback apparatus 30 is, for example, a home server such as that shown in Fig. 2. The content playback apparatus 30 is configured to have capabilities of playing back a content using content data stored in a storage unit 36, accessing other apparatuses such as a content data providing server 100 via the Internet 3, and directly communicating with the portable wireless terminal 10 by wireless communication when the portable wireless terminal 10 is located within the particular range from the content playback apparatus 30.

In brief, the content playback apparatus 30 includes a controller 31, a storage unit 36, a content playback data output unit 40, a wireless interface 46, and an external network interface 48, wherein these parts are connected to each other via a bus 33.

Note that the content playback apparatus 30 does not necessarily need to be configured in a form of a physically separate single apparatus. Furthermore, the content playback apparatus 30 does not necessarily need to be installed as a home server in a home but may be installed as car stereo device equipment or the like in a vehicle such as a car.

The content data providing server 100 includes a management server 110 and content data servers 120. The content data servers 120 include a first content data server 121 and a second content data server 122.

The first content data server 121 is adapted to store content data (which may be in a compressed form) for use by the portable wireless terminal 10, and supply content data to the management server 110 in response to a request issued by the management server 110. The second content data server 122 is adapted to store content data (which may be in a non-compressed form) for use by the content playback apparatus 30, and supply content data to the management server 110 in response to a request issued by the management server 110.

The management server 110 is adapted to receive a content transmission request from the portable wireless terminal 10 or the content playback apparatus 30, and, in response to the request, transmitting content data in a form for use by the portable wireless terminal 10 to the portable wireless terminal 10 and transmitting content data in a form for use by the content playback apparatus 30 to the content playback apparatus 30.

Hereinafter, content data in the form for use by the portable wireless terminal 10 will be referred to simply as content data for use by the terminal, and content data in the form for use by the content playback apparatus 30 will be referred to simply as content data for use by the apparatus.

Fig. 2 illustrates an example of an outward appearance of a content playback system configured to implement the content playback method according to an embodiment of the present invention.

In this example shown in Fig. 2, the content playback system includes a portable wireless terminal 10 and a content playback apparatus 30.

In this example, the portable wireless terminal 10 is a portable telephone terminal, and the content playback apparatus 30 is a home server which is installed in a home of a user and which is capable of playing back stereo music data.

### Example of Portable Wireless Terminal

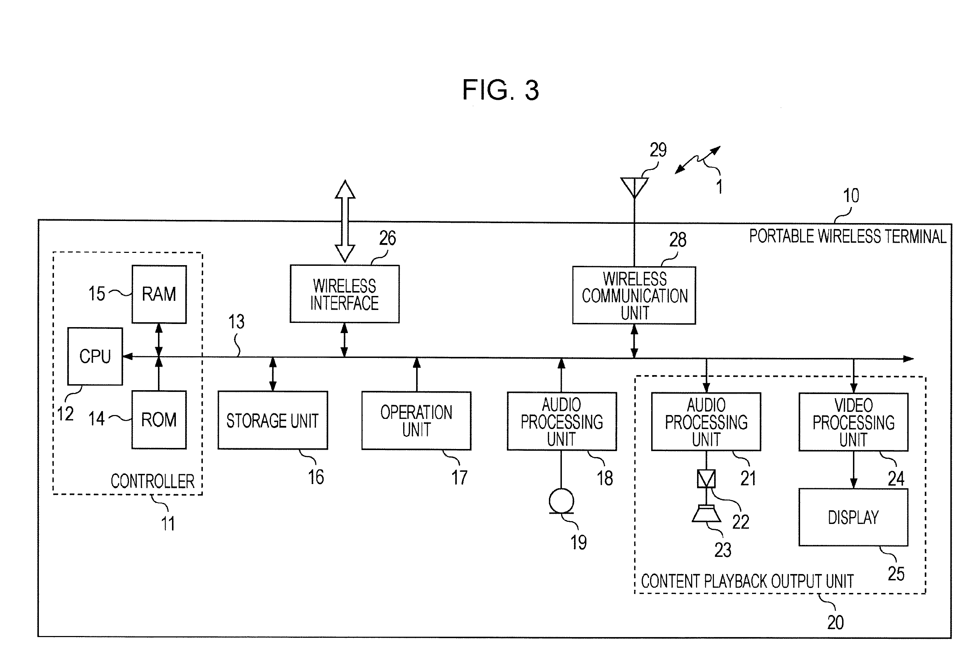

An example of a configuration of the portable wireless terminal 10 is described below with reference to Fig. 3.

The portable wireless terminal 10 includes a CPU 12, a ROM 14, and a RAM 15. The ROM 14 and the RAM 15 are connected to the CPU 12 via a bus 13 so as to form a controller 11.

In the ROM 14, stored are various programs executed by the CPU 12, information identifying the terminal such as a telephone number or an address, and information associated with a user (owner) of the terminal. The RAM 15 is used as a work area by the CPU 12 to store programs and data.

The bus 13 is also connected to a storage unit 16 and an operation unit 17. The storage unit 16 is implemented by a recording medium such as a flash memory or a hard disk firmly installed in the terminal or a recording medium removably mounted on the terminal, and is used to store content data or the like. The operation unit 17 includes various keys and/or a touch pad.

The bus 13 is also connected to a microphone 19 via an audio processing unit 18, an amplifier 22 and a speaker 23 via an audio processing unit 21, and a display 25 via an image processing unit 24.

The microphone 19 is for detecting a voice to be transmitted from the portable telephone. The audio processing unit 18 is adapted to extract signal components with frequencies within a predetermined range from an audio signal output from the microphone 19 and converts the resultant audio signal into digital form. The speaker 23 is adapted to provide an acoustic output of a speech signal or the like received by the portable telephone and is also adapted to output a sound/voice of a content such as a music content. The audio processing unit 21 is adapted to process the audio signal to covert it into a form used in finally outputting the audio signal. More specifically, for example, the process performed by the audio processing unit 21 includes decompressing a compressed music signal.

The display 25 is for displaying an operation screen and a content in the form of an image or text. The image processing unit 24 is adapted to process data associated with the screen or the content data. The process performed by the image processing unit 24 includes, for example, decompressing or decoding the data.

Thus, in the portable wireless terminal 10, a content playback data output unit 20 is realized by the audio processing unit 21, the amplifier 22, the speaker 23, the image processing unit 24, and display 25.

The bus 13 is also connected to a wireless interface 26 and a radio communication unit 28. The radio communication unit 28 is connected to an antenna 29.

The wireless interface 26 provides an interface for direct communication between the terminal and the content playback apparatus 30 by wireless communication such as infrared communication, Blutooth (trademark) communication, or WiFi (Wireless Fidelity) communication. The wireless interface 26 functions as a remote control input/output unit of the content playback apparatus 30. The radio communication unit 28 and the antenna 29 are provided to allow the portable telephone to perform wireless communication.

### Example of content playback apparatus

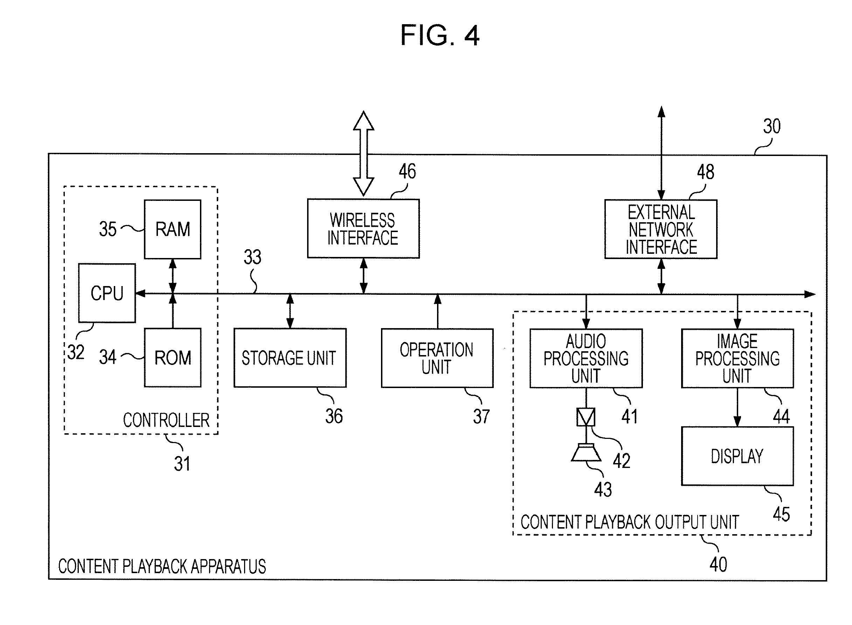

An example of a content playback apparatus 30 is described below with reference to Fig. 4.

The content playback apparatus 30 includes a CPU 32, a ROM 34, and a RAM 35. The ROM 34 and the RAM 35 are connected to the CPU 32 via a bus 33. In the ROM 34, various programs and invariable information are permanently stored. The RAM 35 is used to dynamically store programs and data. A controller 8 is formed by the CPU 32, the ROM 34, and the RAM 35.

The bus 33 is also connected to a storage unit 36 and an operation unit 37. The storage unit 36 is implemented by a recording medium such as a flash memory or a hard disk firmly installed in the apparatus, or a recording medium removably mounted on the apparatus, and is used to store content data or the like.

The bus 33 is also connected to an amplifier 42 and a speaker 43 via an audio processing unit 41, and a display 45 via an image processing unit 44.

The audio processing unit 41 is adapted to process an audio signal to convert it into a form used in finally outputting the audio signal. The image processing unit 44 is adapted to process data associated with various screens and content data in the form of images or text.

Thus, in the content playback apparatus 30, a content playback data output unit 40 is realized by the audio processing unit 41, the amplifier 42, the speaker 43, the image processing unit 44, and display 45.

The bus 33 is also connected to a wireless interface 46 and an external network interface 48.

The wireless interface 46 corresponds to the wireless interface 26 of the portable wireless terminal 10, and functions as an interface for direct communication between the content playback apparatus 30 and the portable wireless terminal 10 by wireless communication such as infrared communication, Blutooth (trademark) communication, or WiFi (Wireless Fidelity) communication. The wireless interface 46 functions as a remote control input/output unit of the portable wireless terminal 10. The external network interface 48 is an interface for connection with an external network such as the Internet 3.

Note that the content playback apparatus 30 does not necessarily need to be configured in a form of a physically separate single apparatus, but functional parts thereof may be disposed separately and connected to each other via a home network (LAN) so as to function as the content playback apparatus 30 as a whole.

For example, in the case of a music playback system, the system may include a content server adapted to store content data manage the stored content data, a stereo playback device including speakers adapted to receive content data from the content server and play back content data, and a remote controller adapted to receive a content list from the content server and send a command to the content server to provide content data of a content selected by a user from the content list to the stereo playback device.

### Differences between portable wireless terminal and content playback apparatus

Differences between the portable wireless terminal 10 and the content playback apparatus 30 are listed below.
(1a) The storage unit 16 of the portable wireless terminal 10 has a rather small storage capacity. In contrast, the storage unit 36 of the content playback apparatus 30 has a large storage capacity.
(1b) The amplifier 22 and the speaker 23 of the portable wireless terminal 10 have limitations on a playback bandwidth and a playback sound volume, while the amplifier 42 and the speaker 43 of the content playback apparatus 30 have a wider playback bandwidth and a greater maximum available playback sound volume.
(1c) The display 25 of the portable wireless terminal 10 is implemented by a small-size liquid crystal display or an organic EL display having a poor capability of displaying information, while the display 45 of the content playback apparatus 30 is implemented by a large-size liquid crystal display or a large-size display of a television set having a high capability of displaying information.
(1d) The portable wireless terminal 10 performs communication using the portable telephone network 1, and thus it is difficult to receive or download data with a large data size in a short time. In contrast, the content playback apparatus 30 performs communication using a highspeed and wide-band network such as an optical network, and thus it is possible to receive or download data with a large data size in a short time.

### Example of process of providing content data and receiving and storing content data

According to an embodiment of the present invention, content data is transmitted as follows. In the following explanation, by way of example, it is assumed that content data for use by the terminal is given in a compressed form, and content data for use by the apparatus is given in a non-compressed form. Issuing request for transmission of content data from portable wireless terminal, transmitting of content data to portable wireless terminal, and acquiring and storing content data in portable wireless terminal.

When a user is out of his/her home, the use is allowed to purchase content data via the portable wireless terminal 10 and playback the acquired content data on the portable wireless terminal 10 as follows. First, the user operates the operation unit 17 of the portable wireless terminal 10 to access a content sale site on the content data providing server 100. In response, a content purchase menu is displayed on the display 25 of the portable wireless terminal 10.

Next, the user operates the operation unit 17 of the portable wireless terminal 10 to specify a genre or a group of content data the user is interested in. For example, in the case of music contents, the user may specify an artist. A request for a list of contents of the specified genre or group is then sent to the content data providing server 100.

In response to the request, the content data providing server 100 transmits the list of contents of the specified genre or group to the portable wireless terminal 10. The content list transmitted by the content data providing server 100 may include only text-based information or may further include an associated thumbnail image. The thumbnail image may be of a jacket of a music content or one scene of a movie content. In the case of a still image, a thumbnail image thereof may be included in the content list.

The content list received from the content data providing server 100 is displayed on the display 25 of the portable wireless terminal 10. If the user selects a content to purchase from the content list and issues a purchase command, a request for transmission of the content data is sent from the portable wireless terminal 10 to the content data providing server 100.

The content transmission request includes information identifying the requested content and information identifying the portable wireless terminal 10 or the user of the portable wireless terminal 10.

The content transmission request further includes authentication information associated with payment for the purchased content data, information necessary to access the content playback apparatus 30, and information indicating the content playback capability of the portable wireless terminal 10. In a case where the user is a registered member and thus the above-described information has already been registered in the content data providing server 100, it is not necessary to transmit the information together with the request.

The authentication information associated with the payment for the purchased content data includes, for example, a bank name, an account number, and a password in the case where the payment is performed by transferring from the bank account of the user.

The information necessary to access the content playback apparatus 30 includes, for example, an IP (Internet Protocol) address and a port number of the content playback apparatus 30, and, if necessary, further information such as a password or a location of content data (file path).

If the management server 110 of the content data providing server 100 receives the content transmission request, the management server 110 authenticates the portable wireless terminal or the user thereof, and then performs the accounting process.

If the user is a registered member, and thus if authentication information necessary in payment for the purchased content, information necessary in accessing the content playback apparatus 30, and information indicating the content playback capability of the portable wireless terminal 10 are already registered, it is not necessary to input the information each time content data is transmitted.

After the accounting process is completed, the management server 110 of the content data providing server 100 receives compressed content data of the requested content from the first content data server 121 and transmits it to the portable wireless terminal 10.

More specifically, for example, when the requested content is of music, music content data compressed in a MP3 (MPEG-1 Audio Layer-3) format, an ATRAC (Adaptive Transform Acoustic Coding) 3 plus format, or any other proper format is transmitted.

In the case where the requested content is of a movie, image data compressed in the MPEG format or the like is transmitted. When the requested content is of a still image, image data compressed in the JPEG (Joint Photographic Experts Group) format or the like is transmitted.

If the portable wireless terminal 10 receives the compressed content data, the portable wireless terminal 10 stores the received content data in the storage unit 16 and displays a message on the display 25 to notify the user that the content data has been received.

The user is allowed to immediately issue a command to play back the content using the corresponding compressed content data.

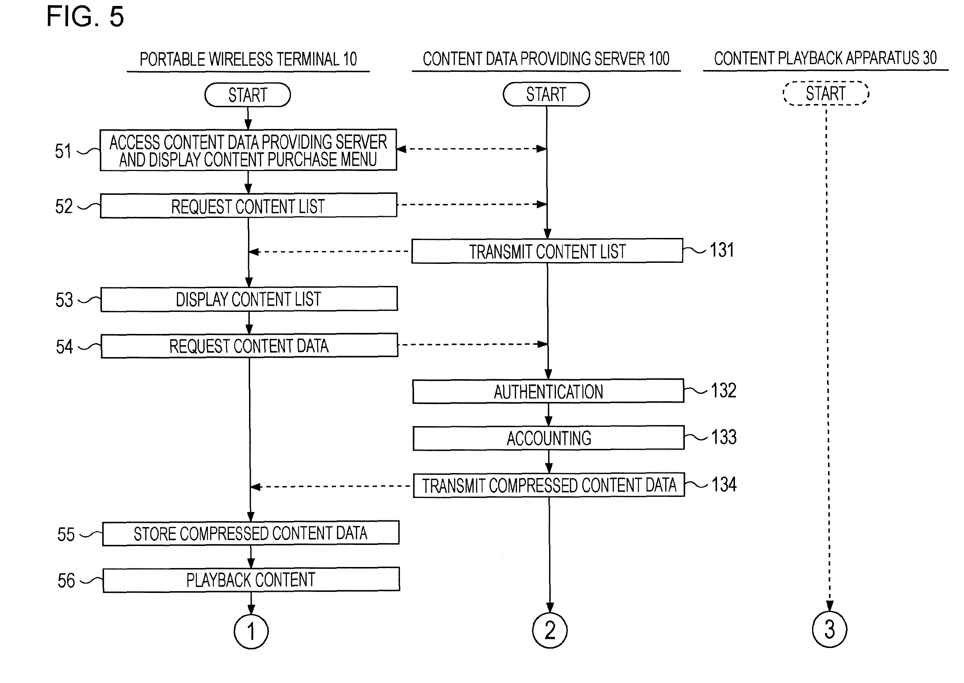

Fig. 5 illustrates a specific example of the process performed by the portable wireless terminal 10 and the content data providing server 100 during the operation described above.

In step 51, the portable wireless terminal 10 accesses the content data providing server 100 and displays a content purchase menu. Next, in step 52, the portable wireless terminal 10 requests the content data providing server 100 to provide a content list. In step 131, the content data providing server 100 transmits the requested content list to the portable wireless terminal 10.

In step 53, the portable wireless terminal 10 displays the received content list. Next, in step 54, the portable wireless terminal 10 requests the content data providing server 100 to transmit the content data of the content specified by the user. In step 132, the content data providing server 100 authenticates the portable wireless terminal or the user thereof. In step 133, the content data providing server 100 performs the accounting process. In step 134, the content data providing server 100 transmits the compressed content data of the specified content to the portable wireless terminal 10.

In step 55, the portable wireless terminal 10 receives the compressed content data and stores the received compressed content data in the storage unit 16. In step 56, in response to an operation performed by the user, the portable wireless terminal 10 plays back the content using the compressed content data.

### Other methods of storing content data in portable wireless terminal

It is also allowed to transfer or copy data stored in the content playback apparatus 30 to the portable wireless terminal 10.

More specifically, for example, content data such as music content data stored on a package medium such as a CD may be input to the content playback apparatus 30 and stored in a recording medium such as a hard disk used as the storage unit 36. The content data stored in the storage unit 36 may be transferred from the content playback apparatus 30 to the portable wireless terminal 10 and stored in the storage unit 16.

In this case, if the content data stored in the package medium is in a non-compressed form as is the case with PCM music data, the content data in the non-compressed form may be directly stored in the storage unit 36 of the content playback apparatus 30. When this content data is transferred to the portable wireless terminal 10, the content data may be compressed and the compressed content data may be stored in the storage unit 16 of the portable wireless terminal 10. Alternatively, when the content data is input to the content playback apparatus 30, the content data may be compressed and stored in the storage unit 36, and the compressed content data may be transferred to the portable wireless terminal 10 and stored in the storage unit 16 thereof.

Also in the case where the content data transmitted from the content data providing server 100 to the content playback apparatus 30 is in a non-compressed form, the content data may be stored in the non-compressed form in the storage unit 36 of the content playback apparatus 30. When this content data is transferred to the portable wireless terminal 10, the content data may be compressed and the compressed content data may be stored in the storage unit 16 of the portable wireless terminal 10. Alternatively, when the content data in the non-compressed form is received by the content playback apparatus 30, the received content data may be compressed and stored in the storage unit 36. This compressed content data may be transferred to the portable wireless terminal 10 and stored in the storage unit 16 thereof.

In a case where content data in a compressed form is transmitted from the content data providing server 100 to the content playback apparatus 30, the content data in the compressed form may be directly stored in the storage unit 36 of the content playback apparatus 30, and may be transferred to the portable wireless terminal 10 and stored in the storage unit 16.

### Accessing content playback apparatus, providing content data to content playback apparatus, and acquiring and storing content data in content playback apparatus

After the content data providing server 100 transmits the compressed content data of the specified content to the portable wireless terminal 10, the content data providing server 100 accesses the content playback apparatus 30 in accordance with the access information registered in advance or included in the content transmission request received from the portable wireless terminal 10, and sends an inquiry command to the content playback apparatus 30 to inquire whether content playback apparatus 30 is capable of receiving the non-compressed content data.

When the content playback apparatus 30 is in a power-off state, the content playback apparatus 30 cannot receive the inquire command, and thus cannot respond to it. Therefore, if the content data providing server 100 does not receive any response from the content playback apparatus 30 in a predetermined period (for example, 15 sec), the content data providing server 100 determines that the content playback apparatus 30 is in a state in which the content playback apparatus 30 is not capable of receiving the inquiry command.

There is a possibility that the storage unit 36 of the content playback apparatus 30 does not have an enough free storage space to store the non-compressed content data to be transmitted from the content data providing server 100. In view of the above, the inquiry command includes data indicating the data size of the non-compressed content data which is going to be transmitted.

### Process of immediately transmitting content data to content playback apparatus

When the content playback apparatus 30 is accessed, if the content playback apparatus 30 is in the state in which it is capable of receiving the inquiry command if the storage unit 36 has an enough free storage space to store the non-compressed content data of the content of interest, the content playback apparatus 30 returns a content transmission command to the content data providing server 100.

The management server 110 of the content data providing server 100 receives the non-compressed content data of the content of interest from the second content data server 122 and transfers the received content data to the content playback apparatus 30. More specifically, in the case where the content is of music, PCM music data of the music content is transmitted.

If the content playback apparatus 30 receives the non-compressed content data, the content playback apparatus 30 stores it in the storage unit 36.

In this case, when the transmission of the data to the content playback apparatus 30 is completed, it is desirable that the content data providing server 100 transmit a message to the portable wireless terminal 10 to notify that the transmission is completed. Alternatively, when the storing of the data in the storage unit 36 is completed, it is desirable that the content playback apparatus 30 transmits a message to the portable wireless terminal 10 to notify that the storing of the data is completed.

If the portable wireless terminal 10 is receives the message, the portable wireless terminal 10 displays a message on the display 25 or outputs a voice or vibration to notify the user that the transmission of the data to the content playback apparatus 30 or the storing of the data is completed.

In addition to the non-compressed content data, the content data providing server 100 may also transmit additional data such as an image of a jacket, a lyric, and/or a liner note of the music to the content playback apparatus 30.

It is difficult to display such additional information on the display 25 of the portable wireless terminal 10. Even if such information is displayed, it is necessary to scroll the screen many times. In contrast, it is possible to display the whole information at a time on the display 45 with a large screen size of the content playback apparatus 30.

When the content playback apparatus 30 is accessed, if the content playback apparatus 30 is in the state in which the content playback apparatus 30 is incapable of receiving data, the content data providing server 100 performs a handling process as described below according to one of methods (2a) to (2c) described below.

(2a) In a first method, the content data providing server 100 notifies the portable wireless terminal 10 that the content playback apparatus 30 is in the state in which the content playback apparatus 30 is incapable of receiving data or no response is received from the content playback apparatus 30.

In this case, when the user comes back to his/her home or the like where the content playback apparatus 30 is located and the user turns on the content playback apparatus 30, if the storage unit 36 has an enough free storage space to store the non-compressed content data of the content, then the content data in the non-compressed form is transmitted from the content data providing server 100 to the content playback apparatus 30 when the content playback apparatus 30 accesses the content data providing server 100.

(2b) In a second method, the content data providing server 100 tries to access the content playback apparatus 30 at predetermined intervals (for example, every one hour). If the content data providing server 100 detects that the content playback apparatus 30 is in the state in which it is capable of receiving content data and the storage unit 36 has an enough free storage space to store the content data in the non-compressed form, the content data providing server 100 transmits the content data in the non-compressed form to the content playback apparatus 30.

In this technique, the maximum allowable number of tries of accessing may be defined. In a case where the content playback apparatus 30 is not brought into the state in which it is capable of receiving the content data within the maximum allowable number of tries, the method (2a) may be executed.

(2c) In a case where the content playback apparatus 30 has a WOL (Wake On LAN) capability, a third method described below may be employed. The content data providing server 100 performs a remote control process to turn on the content playback apparatus 30 into the state in which the content playback apparatus 30 is capable of receiving content data. When the content playback apparatus 30 is turned on, if the storage unit 36 has an enough free storage space to store the content data in the non-compressed form, the content data providing server 100 transmits the content data in the non-compressed form to the content playback apparatus 30.

When the content playback apparatus 30 is turned on, if the storage unit 36 does not have an enough free storage space to store the content data in the non-compressed form, a message indicating this fact is sent from the content playback apparatus 30 to the content data providing server 100. In response to the message, the content data providing server 100 notifies the portable wireless terminal 10 of this fact according to the method (2a).

In this case, the portable wireless terminal 10 informs the user of the above fact by displaying a message on the display 25 or by outputting a voice/vibration alarm.

In this case, when the user comes back to his/her home or the like where the content playback apparatus 30 is located, the user takes action to create an enough free storage space to store the non-compressed content data of the content in the storage unit 36 of the content playback apparatus 30. Thereafter, if the content playback apparatus 30 accesses to the content data providing server 100, the content data in the non-compressed form is transmitted from the content data providing server 100 to the content playback apparatus 30.

### Process of transmitting content data to content playback apparatus

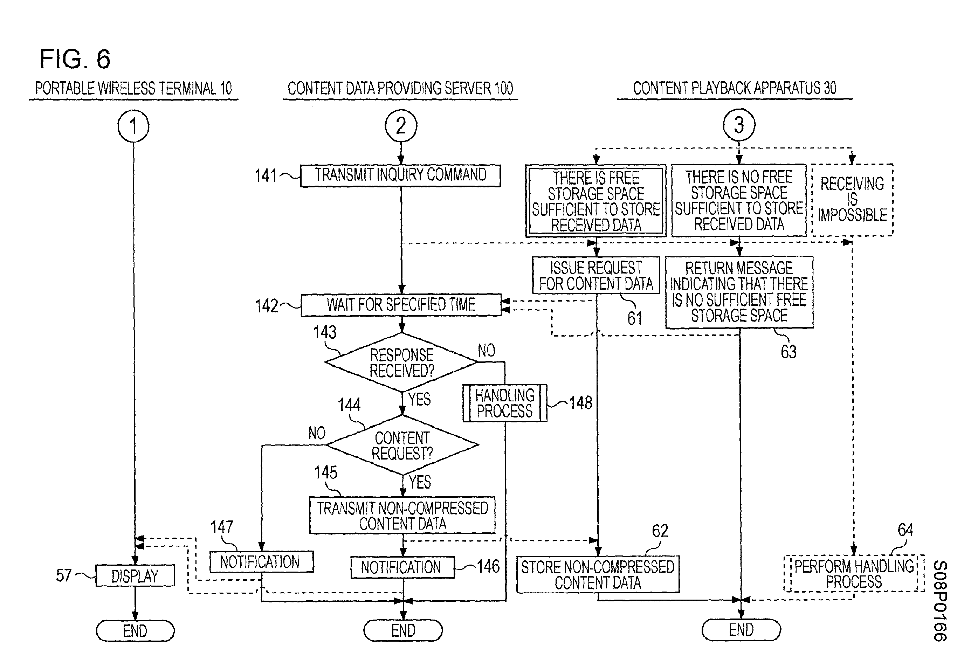

Fig. 6 illustrates an example of a process performed by the content data providing server 100, the content playback apparatus 30, and the portable wireless terminal 10 to transmit the content data in the non-compressed form from the content data providing server 100 to the content playback apparatus 30 after the content data in the compressed form is transmitted from the content data providing server 100 to the content playback apparatus 30 via the process shown in Fig. 5.

After the content data providing server 100 transmits content data in the compressed form to the portable wireless terminal 10 in step 134 in Fig. 5, the content data providing server 100 makes access, in step 141, to the content playback apparatus 30 and sends an inquiry command to the content playback apparatus 30.

If the content playback apparatus 30 is in the state in which it is capable of receiving the inquiry command the storage unit 36 has an enough free storage space to store the content data in the non-compressed form, then, in step 61, the content playback apparatus 30 sends a request for transmission of the content data to the content data providing server 100.

On the other hand, in the case where the storage unit 36 does not have an enough free storage space to store the content data in the non-compressed form although the content playback apparatus 30 is in the state in which it is capable of receiving the inquiry command, the process proceeds to step 63. In step 63, the content playback apparatus 30 returns a message indicating that the storage unit 36 does not have an enough free storage space. In the case where the content playback apparatus 30 is in the state in which the content playback apparatus 30 is incapable of receiving the inquiry command, no response is returned from the content playback apparatus 30.

In step 141, the content data providing server 100 accesses the content playback apparatus 30. Thereafter, the content data providing server 100 waits in step 142 for a predetermined period. In step 143, a determination is made as to whether a response from the content playback apparatus 30 has been received. If a response has been received, then in step 144, a further determination is made as to whether the response is a request for transmission of the content data or the response is a message indicating that there is no sufficient free storage space.

In a case where the response from the content playback apparatus 30 is the request for the transmission of the content data, the content data providing server 100 advances the process from step 144 to step 145. In step 145, the content data providing server 100 transmits the content data in the non-compressed form to the content playback apparatus 30. Next, in step 146, the content data providing server 100 transmits a message to the portable wireless terminal 10 to notify that the transmission of the content data to the content playback apparatus 30 is completed.

In this case, in step 62 after step 61, the content playback apparatus 30 stores the content data in the non-compressed form received from the content data providing server 100 in the storage unit 36. In step 57, the portable wireless terminal 10 displays a message to indicate that the transmission of the content data to the content playback apparatus 30 is completed.

On the other hand, in the case where the response from the content playback apparatus 30 indicates that there is no sufficient free storage space, the content data providing server 100 advances the process from step 144 to step 147. In step 147, the content data providing server 100 notifies the portable wireless terminal 10 of the above face. In step 57, the portable wireless terminal 10 displays the content of the received message.

In the case where no response is returned from the content playback apparatus 30, the content data providing server 100 advances the process from step 143 to step 148. In step 148, the content data providing server 100 performs a process such as (2a), (2b) or (2c). In step 57, the portable wireless terminal 10 displays a message to indicate the result of the process in step 148 notified by the content data providing server 100. In step 64, the content playback apparatus 30 performs a process depending on the result of the process in step 148.

### Exceptional content transmission

When a user issues a request for content data via the portable wireless terminal 10, the user may exceptionally specify that transmission of the content data to the content playback apparatus 30 is not necessary.

This situation can occur, for example, after the content data has been received by the portable wireless terminal 10 and also by the content playback apparatus 30, if the user accidentally deletes the content data in the compressed form from the storage unit 16 of the portable wireless terminal 10.

In this case, if the user wants to play back the content data on the portable wireless terminal 10, the user repeats the above-described process to issue a request for transmission of the content data from the content data providing server 100 to the portable wireless terminal 10. However, in this case, because the content data in the compressed form is still retained in the content playback apparatus 30, it is not necessary to again receive the content data to the content playback apparatus 30.

In view of the above, the screen displayed on the display 25 of the portable wireless terminal 10 for use by the user to purchase content data and issue the content data transmission request may be configured to allow the user not only to issue the request for transmission of content data to both the portable wireless terminal 10 and the content playback apparatus 30 in a default mode, but also to issue a request for transmission of content data only to the portable wireless terminal 10 in the exceptional mode.

The content data providing server 100 may record a communication log so that when such an exceptional transmission of content data is performed, the fee for the re-transmission of the content data is reduced from the normal fee.

### Content playback method

### Playback operation of portable wireless terminal and operation of accessing content playback apparatus

In the content playback system described above, when a user is at a place such as his/her home where the content playback apparatus 30 is located, the user is allowed to play back content data as follows.

The user operates the portable wireless terminal 10 at a location close to the content playback apparatus 30 to display, on the display 25, a list of titles of content data already acquired and stored in the storage unit 16, and the user selects a content to be played back from the list.

If the user issues a command to play back the selected content, the portable wireless terminal 10 accesses the content playback apparatus 30 by one of methods described below depending on the types of the wireless interface 26 of the portable wireless terminal 10 and the wireless interface 46 of the content playback apparatus 30.

In a first method, the wireless interface 26 of the portable wireless terminal 10 and the wireless interface 46 of the content playback apparatus 30 include an infrared light emitting/sensing unit thereby to perform wireless communication.

In this method, if a playback button on the portable wireless terminal 10 is pressed while maintaining the portable wireless terminal in a position in which the infrared light emitting unit (wireless interface 26) of the portable wireless terminal 10 is aimed at the infrared light sensing unit (wireless interface 46) of the content playback apparatus 30 in a similar manner to an infrared remote controller, then a playback command including information identifying the content selected by the user is transmitted in the form of an infrared signal from the infrared light emitting part of the portable wireless terminal 10 and received by the infrared light sensing unit of the content playback apparatus 30.

In a second method, the wireless interface 26 of the portable wireless terminal 10 and the wireless interface 46 of the content playback apparatus 30 are configured based on the Bluetooth (trademark) or WiFi wireless communication technique.

In this technique, when the portable wireless terminal 10 is located close to the content playback apparatus 30, if the power of the portable wireless terminal 10 is turned on, the portable wireless terminal 10 and the content playback apparatus 30 try to connect to each other via their wireless interfaces 26 and 46. After a wireless LAN connection or a PtoP (peer to peer) connection is established between the portable wireless terminal 10 and the content playback apparatus 30, if the playback button on the portable wireless terminal 10 is pressed, then a playback command including information identifying the content selected by the user is transmitted from the portable wireless terminal 10 to the content playback apparatus 30 via the wireless interfaces 26 and 46.

If the content playback apparatus 30 receives the playback command transmitted from the portable wireless terminal 10 by the first or second method described above, the content playback apparatus 30 determines whether content data specified by the playback command is stored in the storage unit 36.

### Playback process in the case where content data is stored in content playback apparatus

If the specified content data is stored in the storage unit 36, the content playback apparatus 30 transmits a message indicating this fact to the portable wireless terminal 10. In response, the portable wireless terminal 10 stops playing back the content on the portable wireless terminal 10, and playback of the content using the content data stored in the storage unit 36 is started.

Thus, high-quality sound and/or image are output from the amplifier 42, the speaker 43, and/or the display 45 of the content playback apparatus 30.

In a case where a plurality of pieces of content data of the specified content are stored in the storage unit 36 of the content playback apparatus 30, the content is played back using content data with highest quality.

For example, in a case where content data in a non-compressed form and content data in a compressed form (which has been transmitted to the portable wireless terminal 10 as described above) are stored in the storage unit 36, the content is played back using the content data in the non-compressed form.

In a case where a plurality of pieces of content data having different bit rates of the content are stored in the storage unit 36 of the content playback apparatus 30, the content is played back using content data having a highest bit rate.

For example, in a case where non-compressed data or lossless compressed data of the music content acquired from CD-DA (CD Digital Audio), high-quality data in the DSD (Direct Stream Digital) format, 128-kbps compressed data in the MP3 format, and 64-kbps compressed data in the ATRAC3plus (trademark) format transferred from the portable wireless terminal 10 are stored in the storage unit 36, the music content is played back using the data in the DSD format.

In a case where 2-channel stereo signal data and multi-channel (for example, 5.1-channel) surround signal data are stored for the music content of interest in the storage unit 36 of the content playback apparatus 30, multi-channel surround playback of the music content is performed using the multi-channel surround signal data.

In a case where metadata associated with the content, such as jacket image data, lyric data, etc., of the music content is also stored in the storage unit 36 of the content playback apparatus 30, the content playback apparatus 30 also plays back the metadata.

More specifically, in the case where the content is music and the metadata associated with the content is jacket image data or lyric data, when the music is played back, the associated jacket image or lyric is displayed on the display 45.

### Playback process in the case where content data is not stored in content playback apparatus

In the case where the content data of the content is not stored in the storage unit 36 of the content playback apparatus 30, one of the following processes is performed. In a first process, the content playback apparatus 30 sends a command, via the wireless communication using the wireless interfaces 46 and 26, to the portable wireless terminal 10 to play back the content, and, in response to the command, the portable wireless terminal 10 plays back the content using the content data stored in the storage unit 16.

From the point of view of the user, if the user selects a content and issues a command to play back the selected content by operating the portable wireless terminal 10, the selected content is played back on the portable wireless terminal 10 as is the case in the normal operation.

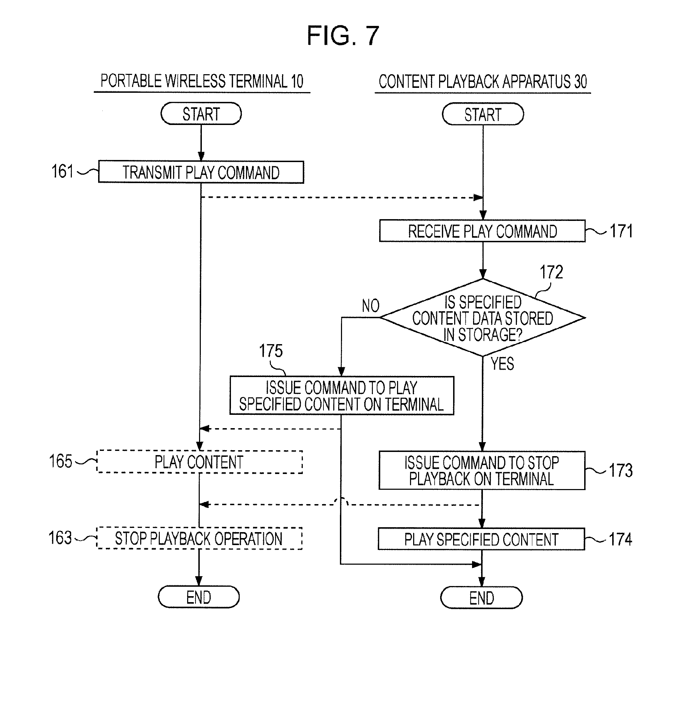

Referring to a flow chart shown in Fig. 7, the first process performed by the portable wireless terminal 10 and the content playback apparatus 30 is described in further detail below.

In step 161, in the state in which the connection between the portable wireless terminal 10 and the content playback apparatus 30 via the wireless interfaces 26 and 46 is established, the portable wireless terminal 10 sends the playback command including information identifying the content selected by the user to the content playback apparatus 30.

In step 171, the content playback apparatus 30 receives the playback command. In step 172, the content playback apparatus 30 determines whether content data of the content specified by the playback command is stored in the store unit 36.

If the content data of the specified content is stored in the storage unit 36, the process proceeds from step 172 to step 173. In step 173, the content playback apparatus 30 sends a command to the portable wireless terminal 10 to stop the playback of the content. In step 174, the content playback apparatus 30 plays back the content using the content data stored in the storage unit 36. In step 163, the portable wireless terminal 10 stops the playback of the content.

On the other hand, in the case where the content data of the content is not stored in the storage unit 36, the process proceeds from step 172 to step 175. In step 175, the content playback apparatus 30 sends a command to the portable wireless terminal 10 to play back the content. In step 165, the portable wireless terminal 10 plays back the content using the content data stored in the storage unit 16.

Note that one of steps 163 and 165 is performed by the portable wireless terminal 10 depending on whether the content data of the content is stored in the content playback apparatus 30.

Now, a second process is described. In the second process, when the content data of the content is not stored in the storage unit 36 of the content playback apparatus 30, the content playback apparatus 30 sends a command, via the wireless communication using the wireless interfaces 46 and 26, to the portable wireless terminal 10 to stop playback of the content and transmit the content data of the content. In response, the portable wireless terminal 10 stops the playback of the content and transmits the compressed data of the content stored in the storage unit 16 to the content playback apparatus 30 via the wireless communication using the wireless interfaces 26 and 46. The content playback apparatus 30 plays back the content using the received content data.

In this case, in the content playback apparatus 30, the content data received from the portable wireless terminal 10 is first stored in the storage unit 36 and the content is played back while reading the content data from the storage unit 36, or the content is played back by directly using the content data supplied from the portable wireless terminal 10 without storing the content data in the storage unit 36.

In a case where the copyright does not permit the content data supplied from the portable wireless terminal 10 to retain in the storage unit 36 after the completion of playback, the content data is deleted from the storage unit 36 after the playback is completed.

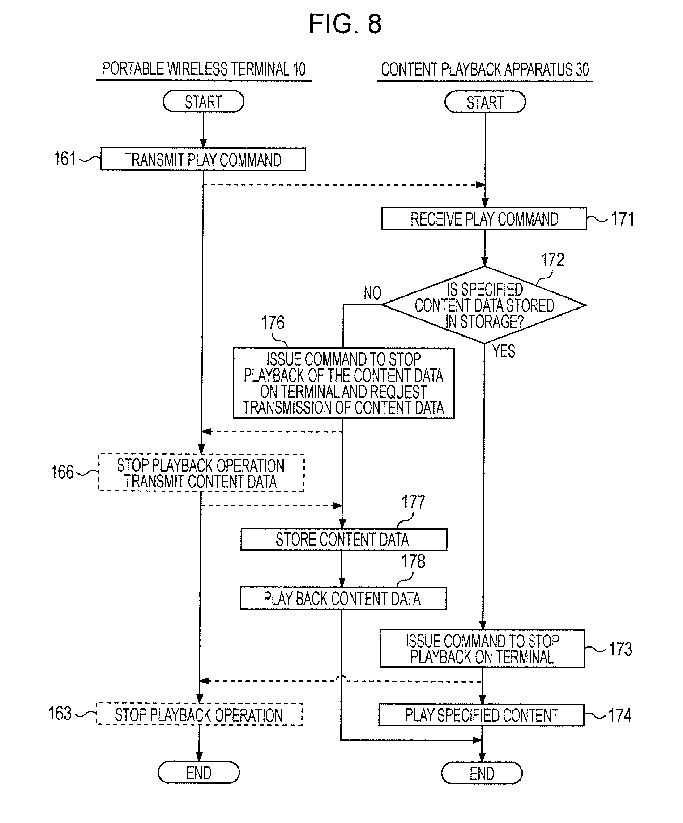

Referring to a flow chart shown in Fig. 8, the second process performed by the portable wireless terminal 10 and the content playback apparatus 30 is described in further detail below.

In step 161, in the state in which the connection between the portable wireless terminal 10 and the content playback apparatus 30 via the wireless interfaces 26 and 46 is established, the portable wireless terminal 10 sends the playback command including information identifying the content selected by the user to the content playback apparatus 161. In step 171, the content playback apparatus 30 receives the playback command. In step 172, the content playback apparatus 30 determines whether content data of the content specified by the playback command is stored in the store unit 36 as in the first process described above with reference to Fig. 7.

If the content data of the specified content is stored in the storage unit 36, the process proceeds from step 172 to step 173. In step 173, the content playback apparatus 30 sends a command to the portable wireless terminal 10 to stop the playback of the content. In step 174, the content playback apparatus 30 plays back the content using the content data stored in the storage unit 36. In step 163, the portable wireless terminal 10 stops playing back the content as in the first process described above with reference to Fig. 7.

On the other hand, in the case where the content data of the content is not stored in the storage unit 36, the process proceeds from step 172 to step 176. In step 176, the content playback apparatus 30 sends a command to the portable wireless terminal 10 to stop playing back the content and transmit the content data of the content. In step 166, the portable wireless terminal 10 stops playing back the content and transmits the content data of the content to the content playback apparatus 30. In step 177, the content playback apparatus 30 stores the received content data in the storage unit 36. In step 168, the content playback apparatus 30 plays back the content using the content data stored in the storage unit 36.

Note that one of steps 163 and 166 is performed by the portable wireless terminal 10 depending on whether the content data of the content is stored in the content playback apparatus 30.

The second process may include an additional process as described below. In the second process, when the content playback apparatus 30 plays back the content using the content data received from the portable wireless terminal 10, it is desirable to performs an additional process to adjust the playback characteristics depending on the playback environment.

More specifically, in some cases, when a music content is played back on the portable wireless terminal 10, the content data is equalized to compensate for the characteristics of the small-size speaker or earphone. However, when the content data is transmitted from the portable wireless terminal 10 to the content playback apparatus 30, not the equalized data but the original data is transmitted. The content playback apparatus 10 may directly play back the received content data or may perform a process such as equalization and/or addition of reverberation on the music content data received from the portable wireless terminal 10 and play back the content using the processed music content data.

In the case where a music content is played back, if the music content data in the compressed form supplied from the portable wireless terminal 10 is directly used to play back the music on the content playback apparatus 30 with the high-performance speaker 43, a lack of high-frequency components of the compressed music data can result in poor sound quality. To ease the above problem, the content playback apparatus 30 may process the compressed music content data received from the portable wireless terminal 10 to compensate for the high-frequency components lost during the compression process and may play back the music using the processed data.

### Playback process in the case where content data has already been acquired by portable wireless terminal

In the case where a user has purchased a content via the portable wireless terminal 10 in the above-described manner and thus content data of the content has already been acquired, the user is allowed to play back the content on the content playback apparatus 30 when the user comes back to the place (for example, the user's home) where the content playback apparatus 30 is located.

The user operates the portable wireless terminal 10 at a location close to the content playback apparatus 30 to display, on the display 25, a list of titles of contents whose content data are stored in the storage unit 16. The user selects a content from the list and issues a command to play back the selected content. Note that the operation of selecting a content and issuing the playback command is similar regardless of whether the playback is performed outdoors or indoors.

In response to the operation performed by the user, the portable wireless terminal 10 accesses the content playback apparatus 30 by one of methods described below depending on the types of the wireless interface 26 of the portable wireless terminal 10 and the wireless interface 46 of the content playback apparatus 30.

In a first method, the wireless interface 26 of the portable wireless terminal 10 and the wireless interface 46 of the content playback apparatus 30 include an infrared light emitting/sensing unit thereby to perform wireless communication.

In this method, if a playback button on the portable wireless terminal 10 is pressed while maintaining the portable wireless terminal in a position in which the infrared light emitting unit (wireless interface 26) of the portable wireless terminal 10 is aimed at the infrared light sensing unit (wireless interface 46) of the content playback apparatus 30 in a similar manner to an infrared remote controller, then a playback command including information identifying the content selected by the user is transmitted in the form of an infrared signal from the infrared light emitting part of the portable wireless terminal 10 and received by the infrared light sensing unit of the content playback apparatus 30.

In a second method, the wireless interface 26 of the portable wireless terminal 10 and the wireless interface 46 of the content playback apparatus 30 are configured based on the Bluetooth (trademark) or WiFi wireless communication technique.

In this technique, when the portable wireless terminal 10 is located close to the content playback apparatus 30, if the power of the portable wireless terminal 10 is turned on, the portable wireless terminal 10 and the content playback apparatus 30 try to connect to each other via their wireless interfaces 26 and 46. After a wireless LAN connection or a PtoP (peer to peer) connection is established between the portable wireless terminal 10 and the content playback apparatus 30, if the playback button on the portable wireless terminal 10 is pressed, then a playback command including information identifying the content selected by the user is transmitted from the portable wireless terminal 10 to the content playback apparatus 30 via the wireless interfaces 26 and 46.

If the content playback apparatus 30 receives the playback command transmitted from the portable wireless terminal 10 by the first or second method described above, the content playback apparatus 30 determines whether content data in the non-compressed form of the specified content is stored in the storage unit 36.

If the non-compressed content data of the content has already been received by the content playback apparatus 30 and stored in the storage unit 36, the content playback apparatus 30 transmits a message indicating this fact to the portable wireless terminal 10 and instructs the portable wireless terminal 10 to stop the playback operation of the content using the compressed content data. The content playback apparatus 30 then plays back the content using the non-compressed content data.

Thus, in this case, the content is played back with high quality.

On the other hand, in the case where the non-compressed content data of the content has not yet been received by the content playback apparatus 30 and not stored in the storage unit 36, the content playback apparatus 30 sends a command to the portable wireless terminal 10 to transmit the compressed content data of the content to the content playback apparatus 30.

In response to the command, the portable wireless terminal 10 transmits the compressed content data of the content to the content playback apparatus 30 via the wireless interfaces 26 and 46. The content playback apparatus 30 receives the non-compressed content data and stores it in the storage unit 36. The content playback apparatus 30 then plays back the content using the compressed content data.

Furthermore, the content playback apparatus 30 determines whether the storage unit 30 has an enough free storage space to store content data in the non-compressed form of the content. If so, the content playback apparatus 30 accesses the content data providing server 100 via external network interface 48 and requests the content data providing server 100 to transmit the non-compressed content data of the content.

The content data providing server 100 determines whether the request is valid. If so, the content data providing server 100 transmits the non-compressed content data of the content to the content playback apparatus 30. If the content playback apparatus 30 receives the non-compressed content data, the content playback apparatus 30 stores it in the storage unit 36.

The content playback apparatus 30 notifies the portable wireless terminal 10 that the non-compressed content data has been stored. The portable wireless terminal 10 informs the user of the above fact by displaying a message on the display 25 or by outputting a voice/vibration alarm.

When the user receives the notification indicating that the non-compressed content data is now available on the content playback apparatus 30, if the user wants to switch the non-compressed content data to enjoy high-quality playback of the content, the user operates the portable wireless terminal 10 to send a playback command from the portable wireless terminal 10 to the content playback apparatus 30.

If the content playback apparatus 30 receives the playback command, the content playback apparatus 30 switches from the compressed content data to the non-compressed content data and continues the playback operation using the non-compressed content data.

The transmission of the request for the compressed content data from the content playback apparatus 30 to the portable wireless terminal 10 and the transmission of the request for the non-compressed content data from the content playback apparatus 30 to the content data providing server 100 do not necessarily need to be performed at the same time, but the compressed content data may be first acquired from the portable wireless terminal 10, and then the request for the non-compressed content data may be sent to the content data providing server 100.

Anyway, once the non-compressed content data has been stored in the storage unit 36, it is possible to play back the content using the high-quality non-compressed content data simply by operating the portable wireless terminal 10 functioning as the remote controller.

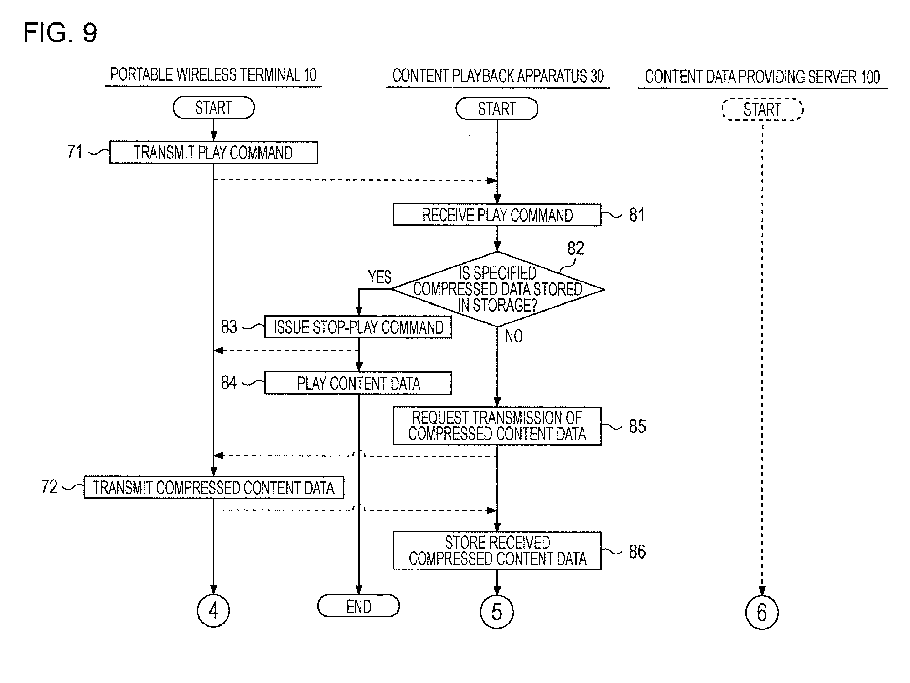

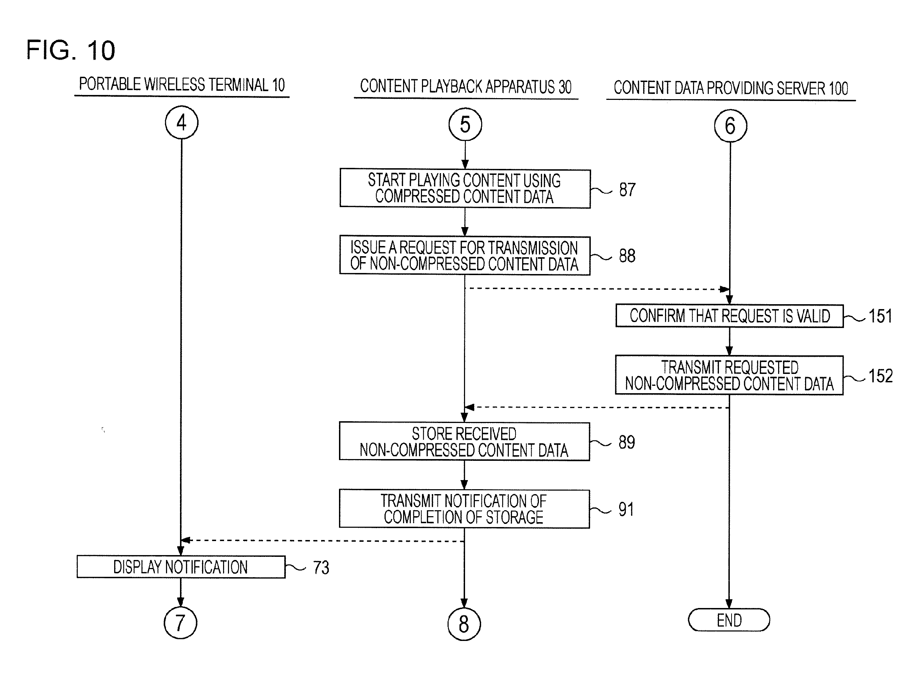

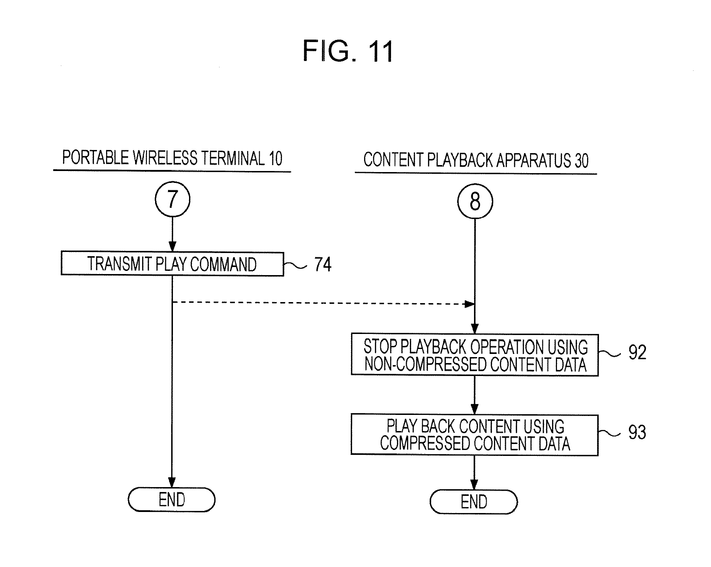

Referring to Figs. 9 to 11, processes performed in the content playback operation by the portable wireless terminal 10, the content playback apparatus 30, and the content data providing server 100 are described in further detail below.

In step 71, in the state in which the connection between the portable wireless terminal 10 and the content playback apparatus 30 via the wireless interfaces 26 and 46 is established, the portable wireless terminal 10 sends the playback command including information identifying the content selected by the user to the content playback apparatus 30.

In step 81, the content playback apparatus 30 receives the play command. Next, in step 82, the content playback apparatus 30 determines whether non-compressed content data of the content specified by the play command is stored in the storage unit 36.

If non-compressed content data of the content specified by the play command is stored in the storage unit 36, the process proceeds from step 82 to step 83. In step 83, the content playback apparatus 30 instructs the portable wireless terminal 10 to stop the playback operation of the content using the compressed content data. In step 84, the content playback apparatus 30 plays back the content using the non-compressed content data. Upon receiving the stop-play command, the portable wireless terminal 10 stops the playback operation of the content data and goes into a standby mode by turning off the main power.

On the other hand, in a case where non-compressed content data of the content is not stored in the storage unit 36, the process proceeds from step 82 to step 85. In step 85, the content playback apparatus 30 requests the portable wireless terminal 10 to transmit the compressed content data of the content. In step 72, the portable wireless terminal 10 transmits the requested compressed content data of the content to the content playback apparatus 30. In step 86, the content playback apparatus 30 receives the compressed content data and stores the received compressed content data in the storage unit 36. Next, in step 87, the content playback apparatus 30 starts playing back the content using the compressed content data.

In step 88, the content playback apparatus 30 requests the content data providing server 100 to transmit the non-compressed content data of the content of interest. In step 151, the content data providing server 100 confirms that the request is valid. In step 152, the content data providing server 100 transmits the non-compressed content data of the content of interest to the content playback apparatus 30. In step 89, the content playback apparatus 30 receives the non-compressed content data and stores the received non-compressed content data in the storage unit 36.

Next, in step 91, the content playback apparatus 30 transmits a message to the portable wireless terminal 10 to notify that the storage of the non-compressed content data is completed. In step 73, the portable wireless terminal 10 displays the content of the received message.

If a user issues, via the portable wireless terminal 10, a command to play back the content using the non-compressed content data, then, in step 74, the portable wireless terminal 10 transmits the play command to content playback apparatus 30. In step 92, the content playback apparatus 30 stops playing back the content using the compressed content data, and, in step 93, the content playback apparatus 30 starts playing back the content using the non-compressed content data.

In the example described above with reference to Figs. 9 to 11, when non-compressed content data of the content is not stored in the storage unit 36, the content playback apparatus 30 receives the compressed content data of the content from the portable wireless terminal 10 and plays back the content using the received compressed content data. Alternatively, when non-compressed content data of the content is not stored in the storage unit 36, the content playback apparatus 30 may instruct the portable wireless terminal 10 to play back the content, and then, as in step 88 in the above-described example, the content playback apparatus 30 may request the content data providing server 100 to transmit the non-compressed content data of the content, and furthermore, as in step 89 in the above-described example, the content playback apparatus 30 may store the received non-compressed content data of the content and then may instruct the portable wireless terminal 10 to stop playing back the content, and finally the content playback apparatus 30 may play the content using the stored non-compressed content data.

### Further examples of content data for use by portable wireless terminal and content playback apparatus

In the examples described above, content data for use by the portable wireless terminal is given in the compressed form, and content data for use by the content playback apparatus is given in the non-compressed form. Alternatively, content data may be in various different forms as described below.

### Content data having different compression ratios

In the case where the content data is of music, the content data for use by the portable wireless terminal may be in a form compressed at a relatively high compression ratio, and the content data for use by the content playback apparatus may be in a form compressed at a relatively low compression ratio.

Also in the case where the content is of an image, the content data for use by the portable wireless terminal may be in a form compressed at a relatively high compression ratio, and the content data for use by the content playback apparatus may be in a form compressed at a relatively low compression ratio.

### Content data in the form of difference data for use by content playback apparatus

In the case where the content data is of music, the content data for use by the portable wireless terminal may be in a compressed form, and the content data for use by the content playback apparatus may be data representing the difference between the non-compressed (PCM) content data and the compressed content data for use by the portable wireless terminal.

Also in the case where the content is of an image, the content data for use by the portable wireless terminal may be in a compressed form, and the content data for use by the content playback apparatus may be data representing the difference between the non-compressed content data and the compressed content data for use by the portable wireless terminal.

When the content data in the form of difference data is used, it is impossible to play back the content using only the difference data. Therefore, the content playback apparatus 30 plays back the content such that the compressed content data supplied from the portable wireless terminal 10 is added to the difference content data supplied from the content data providing server 100 to obtain the non-compressed content data, and the content is played back using the resultant non-compressed content data.

### Multi-channel music content data

In the case where the content data is of music, content data for use by the portable wireless terminal may be, for example, 2-channel stereo music data, and the content data for use by the content playback apparatus may be, for example, multi-channel (5.1-channel) surround music data. The multi-channel surround music data for use by the content playback apparatus may be in a compressed form.

### Further examples

In the case of image content data, the content data for use by the portable wireless terminal may be low-resolution image data, and the content data for use by the content playback apparatus may be high-resolution image data.

The content data for use by the portable wireless terminal may be small-size image data produced by partially deleting pixels of original image data, and the content data for use by the content playback apparatus may be original image data with a large size.

The content data for use by the portable wireless terminal may be low-quality image data with a relatively small number of colors or brightness scale levels or with relatively low contrast, and the content data for use by the content playback apparatus may be high-quality image data with a relatively large number of colors or brightness scale levels or with relatively high contrast.

In this case, one or both of the content data for use by the portable wireless terminal and the content playback apparatus may be in a compressed form.

### Further examples of content playback methods

In the examples of the content playback methods described above, when the playback command is sent from the portable wireless terminal 10 to the content playback apparatus 30, if the content data (for example, non-compressed content data) of the content for use by the content playback apparatus is not stored in the storage unit 36 of the content playback apparatus 30, the content playback apparatus 30 may play back the content using the content data (for example, compressed content data) for use by the portable wireless terminal supplied from the portable wireless terminal 10 without requesting the content data providing server 100 to provide the content data for use by the content playback apparatus.

In this case, the content playback apparatus 30 may process the content data for use by the portable wireless terminal supplied from the portable wireless terminal 10 to improve the data quality thereof, and store the resultant content data in the storage unit 36.

For example, in the case of music content data, when the content data for use by the portable wireless terminal is compressed music data and the content data for use by the content playback apparatus is non-compressed music data, the compressed music data has a lower frequency bandwidth than the non-compressed music data. Thus, the content playback apparatus 30 may compensate for the lost high-frequency components of the compressed music data depending on the compression algorithm to obtain music data with higher quality and higher bit resolution.

In the case of moving image content data, when the content data for use by the portable wireless terminal is low-resolution moving image data, and the content data for use by the content playback apparatus is high-resolution moving image data, the content playback apparatus 30 may process the low-resolution moving image for use by the portable wireless terminal to obtain moving image data with higher resolution for use by the content playback apparatus 30.

The improvement performed by the content playback apparatus 30 in terms of the quality of the content data originally adapted for use by the portable wireless terminal makes it possible to play back the content via the amplifier 42 and the speaker 43 or via the display 45 of the content playback apparatus 30 with higher quality than can be obtained when the content is played back on the portable wireless terminal 10 using the content data for use by the portable wireless terminal.

### Further examples of content providing methods

In the examples described above, the content data providing server 100 provides the content data for use by the content playback apparatus directly to the content playback apparatus 30. Instead of directly providing the content data for use by the content playback apparatus to the content playback apparatus 30, the content data may be provided as follows. On the basis of the process performed by the content data providing server 100 for providing the content data to the content playback apparatus 30, the content data providing server 100 may store the content data for use by the content playback apparatus in a package medium such as a CD and may send it to a user. The user mounts the received package medium on the storage unit 36 of the content playback apparatus 30 so that the content playback apparatus 30 acquires the content data for use by the content playback apparatus. In a case where the storage unit 36 does not have a drive for the package medium, the content data for use by the content playback apparatus may be read from the package medium into the storage unit 36.

In the example of the content providing method described above with reference to Figs. 5 and 6, it is assumed that the content transmission request is transmitted from the portable wireless terminal 10 to the content data providing server 100 when the user is at a place outside his/her home. The content transmission request may be transmitted from the content playback apparatus 30 to the content data providing server 100 when the user is at his/her home. In response, the content data providing server 100 may provide content data to both the portable wireless terminal 10 and the content playback apparatus 30.

Also in this case, after the content playback apparatus 30 has acquired the content data for use by the content playback apparatus and the portable wireless terminal 10 has acquired the content data for use by the portable wireless terminal from the content data providing server 100, if the user issues a command to play back the content by operating the portable wireless terminal 10 at a location close to the content playback apparatus 30, the content playback apparatus 30 plays back the content using the content data for use by the content playback apparatus in accordance with the command.

### Further examples of system configurations

In the examples described above, it is assumed that the content playback apparatus 30 is installed as the home server at a user's home or the like. Alternatively, the content playback apparatus 30 may be installed as a stereo playback system in a vehicle or the like.

In this case, in order for the content playback apparatus 30 to directly receive content data for use by the content playback apparatus 30 installed in the vehicle from the content data providing server 100, content playback apparatus 30 may be configured to be capable of connecting to the content data providing server 100 via wireless communication such as mobile communication.

This makes it possible for the user to enjoy contents in a manner described below. When the user is at a location such as a rest area apart from the vehicle, the user can acquire content data for use by the portable wireless terminal via the portable wireless terminal such as a portable telephone terminal and the user can enjoy the content on the portable wireless terminal. Meanwhile, content data for use by the content playback apparatus is transmitted to the content playback apparatus installed in the vehicle, and thus when the user comes back into the vehicle, if the user issues a command to play back the content via the portable wireless terminal, then content playback apparatus plays back the content with high quality using the content data for use by the content playback apparatus.

Also in this case, instead of directly providing the content data for use by the content playback apparatus to the content playback apparatus, the content data may be provided as follows. That is, on the basis of the process performed by the content data providing server for providing the content data to the content playback apparatus, the content data providing server stores the content data for use by the content playback apparatus in a package medium such as a CD and sends it to the user. The user mounts the received package medium on the storage unit of the content playback apparatus so that the content playback apparatus acquires the content data for use by the content playback apparatus.

When the user is in his/her vehicle, if the user selects a content via the portable wireless terminal, the selected content is played back on the content playback apparatus.

It should be understood by those skilled in the art that various modifications, combinations, sub-combinations and alterations may occur depending on design requirements and other factors insofar as they are within the scope of the appended claims or the equivalents thereof.

## Claims

1. A content data providing method comprising the steps of:
if a request for providing a content is received from a portable wireless terminal or a content playback apparatus associated with the portable wireless terminal, providing content data of the requested content in a form adapted for use by the portable wireless terminal to the portable wireless terminal; and
providing content data of the requested content in a form adapted for use by the content playback apparatus to the content playback apparatus or performing a process for providing content data of the requested content in the form adapted for use by the content playback apparatus.

2. The content data providing method according to claim 1, wherein the content data for use by the portable wireless terminal is in a compressed form, and the content data for use by the content playback apparatus is in a non-compressed form.

3. The content data providing method according to claim 1, wherein the content data for use by the portable wireless terminal is in a compressed form, and the content data for use by the content playback apparatus is in a form compressed at a lower compression ratio than the compression ratio of the content data for use by the portable wireless terminal.

4. The content data providing method according to claim 1, wherein the content data for use by the portable wireless terminal is in a compressed form, and the content data for use by the content playback apparatus is data representing the difference between the content in the non-compressed form and the content data in the compressed form for use by the portable wireless terminal.

5. The content data providing method according to claim 1, wherein the content data for use by the portable wireless terminal is relatively low in quality and/or includes a small number of channels and/or is small in data size, and the content data for use by the content playback apparatus is relatively high in quality and/or includes a large number of channels and/or is large in data size.

6. A method of playing back content data in a content playback system including a portable wireless terminal and a content playback apparatus which are capable of wirelessly communicating with each other, comprising the steps of:
when a command to play back a content whose content data for use by the portable wireless terminal is stored in the portable wireless terminal is issued via the portable wireless terminal, transmitting a command to play back the content from the portable wireless terminal to the content playback apparatus by wireless communication; and
if content data of the content for use by the content playback apparatus is stored in the content playback apparatus, playing back the content on the content playback apparatus by using the content data for use by the content playback apparatus.

7. The content playback method according to claim 6, wherein the content data for use by the portable wireless terminal is in a compressed form, and the content data for use by the content playback apparatus is in a non-compressed form.

8. The content playback method according to claim 6, wherein the content data for use by the portable wireless terminal is in a compressed form, and the content data for use by the content playback apparatus is in a form compressed at a lower compression ratio than the compression ratio of the content data for use by the portable wireless terminal.

9. The content playback method according to claim 6, wherein the content data for use by the portable wireless terminal is in a compressed form, and the content data for use by the content playback apparatus is data representing the difference between the content in the non-compressed form and the content data in the compressed form for use by the portable wireless terminal.

10. The content playback method according to claim 6, wherein the content data for use by the portable wireless terminal is relatively low in quality and/or includes a small number of channels and/or is small in data size, and the content data for use by the content playback apparatus is relatively high in quality and/or includes a large number of channels and/or is large in data size.

11. The content playback method according to claim 6, wherein in a case where content data of the content for use by the content playback apparatus is not stored in the content playback apparatus, a request for transmission of the content data of the content for use by the content playback apparatus is transmitted from the content playback apparatus to a content data providing server, and if the content data of the content for use by the content playback apparatus is transmitted from the content data providing server in response to the request, the received content data is stored in the content playback apparatus and the content is played back using the content data for use by the content playback apparatus.

12. A portable wireless terminal comprising:
a storage unit adapted to store content data;
content playback means for playing back a content by using content data stored in the storage unit;
wireless communication means for transmitting a content data providing request to a content data providing server and receiving content data for use by the portable wireless terminal from the content data providing server;
a wireless interface adapted to wirelessly communicate with an apparatus; and
control means for storing the content data for use by the portable wireless terminal received by the wireless communication means in the storage unit, and, if a command to play back a content whose content data for use by the portable wireless terminal is stored in the storage unit is issued, transmitting a command to play back the content to a content playback apparatus connected to the portable wireless terminal via the wireless interface.

13. A content playback apparatus comprising:
a storage unit adapted to store content data;
content playback means for playing back a content by using content data stored in the storage unit;
an external network interface adapted to transmit a content data providing request to a content data providing server and receive content data for use by the content playback apparatus from the content data providing server;
a wireless interface adapted to wirelessly communicate with an apparatus; and
control means for storing the content data for use by the portable wireless terminal received by the external network interface in the storage unit, and, when a command to play back a content is transmitted from a portable wireless terminal connected via the wireless interface, if content data of the specified content for use by the content playback apparatus is stored in the storage unit, then playing back the content using the content data for use by the content playback apparatus by the content playback means.

14. A method of playing back content data in a content playback system including a portable wireless terminal and a content playback apparatus which are capable of wirelessly communicating with each other, comprising the steps of:
when a command to play back a content whose content data is stored in the portable wireless terminal is issued on the portable wireless terminal, transmitting a command to play back the content from the portable wireless terminal to the content playback apparatus by wireless communication; and
if content data of the content is stored in the content playback apparatus, playing back the content by using the content data stored in the content playback apparatus.

15. The content playback method according to claim 14, wherein in a case where content data of the content is not stored in the content playback apparatus, a command to play back the content is transmitted from the content playback apparatus to the portable wireless terminal by the wireless communication, and the content is played back on the portable wireless terminal by using the content data stored in the portable wireless terminal.

16. The content playback method according to claim 14, wherein in a case where content data of the content is not stored in the content playback apparatus, a request for transmission of content data of the content is transmitted from the content playback apparatus to the portable wireless terminal by the wireless communication, the content data of the content is transmitted from the portable wireless terminal to the content playback apparatus by wireless communication, and the content is played back on the content playback apparatus by using the content data received from the portable wireless terminal.

17. The content playback method according to claim 14, wherein in a case where a plurality of pieces of content data of the content are stored in the content playback apparatus, the content is played back using content data having a lowest compression ratio or having a highest bit rate.

18. The content playback method according to claim 16, wherein the content data transmitted from the portable wireless terminal to the content playback apparatus is processed into a form so as to achieve higher quality in the playback of the content, and the content is played back using the resultant processed content data.

19. A portable wireless terminal comprising:
a storage unit adapted to store content data;
content playback means for playing back a content by using content data;
a wireless interface adapted to wirelessly communicate with an apparatus; and
control means for, if a command to play back a content whose content data is stored in the storage unit is issued, transmitting a command to play back the content to a content playback apparatus connected to the portable wireless terminal via the wireless interface, and, if a command to play back the content is issued by the content playback apparatus or of a request for transmission of content data of the content is issued by the content playback apparatus, playing back the content using the content playback means or transmitting the content data of the content to the content playback apparatus via the wireless interface.

20. A content playback apparatus comprising:
a storage unit adapted to store content data;
content playback means for playing back a content by using content data;
a wireless interface adapted to wirelessly communicate with an apparatus; and
control means for, when a command to play back a content is transmitted from a portable wireless terminal connected via the wireless interface, if content data of the content is stored in the storage unit, then playing back the content using the content data for use by the content playback apparatus by the content playback means, while if content data of the content is not stored in the storage unit, then transmitting a command to play back the content to the portable wireless terminal via the wireless interface or transmitting a request for transmission of content data of the content to the portable wireless terminal via the wireless interface.

21. A portable wireless terminal comprising:
a storage unit adapted to store content data;
a content playback unit adapted to play back a content by using content data stored in the storage unit;
a wireless communication unit adapted to transmit a content data providing request to a content data providing server and receive content data for use by the portable wireless terminal from the content data providing server;
a wireless interface adapted to wirelessly communicate with an apparatus; and
a control unit adapted to store the content data for use by the portable wireless terminal received by the wireless communication unit in the storage unit, and, if a command to play back a content whose content data for use by the portable wireless terminal is stored in the storage unit is issued, transmit a command to play back the content to a content playback apparatus connected to the portable wireless terminal via the wireless interface.

22. A content playback apparatus comprising:
a storage unit adapted to store content data;
a content playback unit adapted to play back a content by using content data stored in the storage unit;
an external network interface adapted to transmit a content data providing request to a content data providing server and receive content data for use by the content playback apparatus from the content data providing server;
a wireless interface adapted to wirelessly communicate with an apparatus; and
a control unit adapted to store the content data for use by the portable wireless terminal received by the external network interface in the storage unit, and, when a command to play back a content is transmitted from a portable wireless terminal connected via the wireless interface, if content data of the specified content for use by the content playback apparatus is stored in the storage unit, then play back the content using the content data for use by the content playback apparatus by the content playback unit.

23. A portable wireless terminal comprising:
a storage unit adapted to store content data;
a content playback unit adapted to play back a content by using content data;
a wireless interface adapted to wirelessly communicate with an apparatus; and
a control unit adapted to, if a command to play back a content whose content data is stored in the storage unit is issued, transmit a command to play back the content to a content playback apparatus connected to the portable wireless terminal via the wireless interface, and, if a command to play back the content is issued by the content playback apparatus or of a request for transmission of content data of the content is issued by the content playback apparatus, play back the content using the content playback unit or transmit the content data of the content to the content playback apparatus via the wireless interface.

24. A content playback apparatus comprising:
a storage unit adapted to store content data;
a content playback unit adapted to play back a content by using content data;
a wireless interface adapted to wirelessly communicate with an apparatus; and
a control unit adapted to, when a command to play back a content is transmitted from a portable wireless terminal connected via the wireless interface, if content data of the content is stored in the storage unit, play back the content using the content data for use by the content playback apparatus by the content playback unit, while if content data of the content is not stored in the storage unit, transmit a command to play back the content to the portable wireless terminal via the wireless interface or transmitting a request for transmission of content data of the content to the portable wireless terminal via the wireless interface.
